# EUROPÄISCHE PATENTANMELDUNG

(11) **EP 1 283 426 A2**
(43) Veröffentlichungstag der Anmeldung: **12.02.2003**
(21) Anmeldenummer: 02102103.5
(22) Anmeldetag: 07.08.2002
(51) Int. Cl.: G01T 1/202

(54) **Röntgendetektor mit Heizvorrichtung**

(30) Priorität: 09.08.2001 DE 10139234
(71) Anmelder: Philips Corporate Intellectual Property GmbH, 20099 Hamburg (DE); Koninklijke Philips Electronics N.V., 5621 BA Eindhoven (NL)
(72) Erfinder: Wischmann, Hans-Aloys, Dr., 52088, Aachen (DE); Wieczorek, Herfried,Dr., 52088, Aachen (DE)
(74) Vertreter: Volmer, Georg, Dipl.-Ing.

(57) **Zusammenfassung**

Die Erfindung betrifft einen Röntgendetektor zur Umwandlung elektromagnetischer Strahlung, insbesondere Röntgenstrahlung, in elektrische Ladungsträger. Des weiteren betrifft die Erfindung ein Verfahren zum Betrieb eines Röntgendetektors und ein Verfahren zur Herstellung eines Röntgendetektors. Des weiteren betrifft die Erfindung ein Röntgenuntersuchungsgerät mit einem Röntgendetektor. Um Bildartefakte, die durch Bright Burn Effekte hervorgerufen werden, zu reduzieren, wird vorgeschlagen, einen Röntgendetektor (1) zur Umwandlung elektromagnetischer Strahlung, insbesondere Röntgenstrahlung, in elektrische Ladungsträger mit einer Umwandlungsanordnung erfindungsgemäß mit einer Heizvorrichtung (7) auszustatten, die vorgesehen ist, der Umwandlungsanordnung (2) während des Betriebes des Röntgendetektors (1) Wärme zuzuführen.

## Beschreibung

Die Erfindung betrifft einen Röntgendetektor zur Umwandlung elektromagnetischer Strahlung, insbesondere Röntgenstrahlung, in elektrische Ladungsträger. Des weiteren betrifft die Erfindung ein Verfahren zum Betrieb eines Röntgendetektors und ein Verfahren zur Herstellung eines Röntgendetektors, Des weiteren betrifft die Erfindung ein Röntgenuntersuchungsgerät mit einem Röntgendetektor.

Röntgendetektoren werden insbesondere in der Medizintechnik und dort in der Röntgenuntersuchungstechnik eingesetzt und dienen dazu, Röntgenbilder eines Untersuchungsobjektes, in der Regel eines Patienten, im Rahmen einer zumeist medizinischen Untersuchung oder Therapie aufzunehmen. Mittels eines Bildaufnahmesystems, zu dem auch ein Röntgendetektor gehört, werden von der das Untersuchungsobjekt durchdringenden Röntgenstrahlung Bilder erzeugt, die bspw. auf einem Monitor ausgegeben werden. Die auf den Röntgendetektor einfallende Röntgenstrahlung wird in einer Umwandlungsanordnung in elektrische Ladungsträger umgewandelt. Die in der Umwandlungsanordnung erzeugten elektrischen Ladungsträger werden in zugeordneten Kapazitäten gesammelt und von einer nachgeschalteten Ausleseelektronik ausgelesen.

Ein Röntgendetektor ist generell derart aufgebaut, dass die elektromagnetische Röntgenstrahlung auf eine Umwandlungsanordnung auftrifft. Je nach Ausgestaltung des Röntgendetektors wird die Röntgenstrahlung in der Umwandlungsanordnung entweder in einer direktkonvertierenden Umwandlungsschicht in elektrische Ladungsträger umgewandelt, die dann ausgelesen werden, oder mittels einer aus zwei Umwandlungsschichten zusammengesetzten Umwandlungsanordnung zuerst in einer Szintillatoranordnung in sichtbares Licht und dann in einer darunter angeordneten zweiten Umwandlungsschicht, insbesondere einer Photosensorenanordnung, in elektrische Ladungsträger gewandelt und ausgelesen.

In der JP 5180945 ist eine Anordnung beschrieben, bei der während des Herstellungsprozesses der Szintillatorschicht mittels einer Infrarot-Lampe Wärme zugeführt wird. Diese Lampe ist nicht im Röntgendetektor angeordnet, sondern beabstandet über der gesamten Anordnung. Mittels einer auf der Szintillatorschicht angeordneten Infrarotstrahlung absorbierenden Schicht wird bei Bestrahlung Wärme erzeugt, die den Szintillator aufheizt. Die Wärmezuführung wird benutzt, um Unregelmäßigkeiten im Szintillator auszuheizen, bzw. eine Homogenisierung der Dotierung zu erreichen. Das Szintillatormaterial wird dazu nach dem Aufdampfen auf ein Substrat aufgeheizt.

Flache dynamische Röntgendetektoren enthalten in der Regel eine Szintillatoranordnung aus dotiertem Cäsiumjodid (Csl), die bei starker Bestrahlung mit Röntgenstrahlen eine Erhöhung der Empfindlichkeit für Röntgenstrahlung aufweist. Die relative Erhöhung erreicht dabei 5-10 % und klingt nur über mehrere Tage ab. Sie wird als Bright-Burn bezeichnet, ist räumlich inhomogen und erreicht ihr Maximum in den direkt bestrahlten Bereichen des Röntgendetektors. Dieser Bright Burn Effekt ist sehr nachteilig, da in den Bereichen, in denen diese Erhöhung der Empfindlichkeit auftritt, eine andere Anzahl von Lichtquanten aus der gleichen Anzahl von Röntgenquanten erzeugt wird, als in Bereichen in denen keine Erhöhung der Empfindlichkeit auftritt. Dadurch entstehen ungewünschte Verstärkungen und/oder Schwächungen im Röntgenbild.

Auch in direktkonvertierenden Röntgendetektoren, in denen mittels einer Bleioxid- oder Selenschicht auftreffende Röntgenstrahlung direkt in elektrische Ladungsträger umgewandelt wird, können Bildartefakte auftreten.

Der Bright Burn Effekt kann nicht durch Bildnachbearbeitung korrigiert werden. Er kann nur durch eine erneute Aufnahme von Empfindlichkeitskorrekturbildern, sog. Gain-Images korrigiert werden.

Diese Erhöhung der Empfindlichkeit ist in klinischen Bildern bei typischer Fallmischung möglicherweise nicht wahrnehmbar. Der Bright Burn Effekt als Folge einer ungewöhnlichen Aufnahme oder Aufnahmefolge oder einer Fehlbedienung kann jedoch weder gezielt noch beschleunigt abgebaut werden.

Zudem müssen in regelmäßigen Zeitabständen die zur Empfindlichkeits-Korrektur verwendeten Kalibrationsbilder aktualisiert werden. Es ist keinesfalls möglich, für diese Kalibrationsbilder das Abklingen eines evtl. vorhandenen Bright-Burns abzuwarten, da hierzu über mehrere Tage keine Bilder aufgenommen werden könnten.

Die Gain-Images können zusätzlich im Rahmen von adaptiven Kalibrationen und einem Fernwartungsservice zur Überwachung von Szintillator-Veränderungen herangezogen werden. Die Größenskala dieser Veränderungen kann von wenigen Millimetern bis zur Größe des Detektors reichen. Die Kalibration und Überwachung wird durch eine räumlich inhomogene relative Erhöhung um mehrere Prozent aufgrund von Bright-Burn erschwert oder sogar unmöglich gemacht.

Für die lange Abklingdauer des Bright-Burn Effekts sind vermutlich tief liegende Trapzustände verantwortlich.

Aufgabe der Erfindung ist es deshalb, eine Anordnung und ein Verfahren anzugeben, mittels derer der Bright-Burn Effekt reduziert werden kann.

Diese Aufgabe wird durch einen Röntgendetektor zur Umwandlung elektromagnetischer Strahlung, insbesondere Röntgenstrahlung, in elektrische Ladungsträger gelöst, der umfaßt: eine Umwandlungsanordnung und eine Heizvorrichtung, die vorgesehen ist, der Umwandlungsanordnung während des Betriebes des Röntgendetektors Wärme zuzuführen.

Der Röntgendetektor enthält dabei eine Umwandlungsanordnung, die entweder bei einem direktkonvertierenden Röntgendetektor durch eine direkt konvertierende Umwandlungsschicht, bspw. aus PbO oder Se gebildet wird oder bei einer zweiten Ausführungsform durch eine Szintillatoranordnung und eine Photosensorenanordnung gebildet wird. Bei direkt konvertierenden Röntgendetektoren wird die auftreffende Röntgenstrahlung direkt in elektrische Ladungsträger umgewandelt.

Beider zweiten Ausführungsform trifft von einer Röntgenstrahlungsquelle ausgesandte Röntgenstrahlung auf die Szintillatoranordnung, wird dort in Lichtstrahlung umgewandelt, die von der Photosensorenanordnung detektiert und einer Ausleselektronik zugeführt wird.

Der Röntgendetektor enthält erfindungsgemäß zur Beseitigung des Bright Burn Effekts eine Heizvorrichtung, die der Umwandlungsanordnung während des Betriebes des Röntgendetektors bei Bedarf Wärme zuführt.

Mittels des Aufheizens des Szintillators oder der direktkonvertierenden Umwandlungsschicht auf eine Temperatur im Bereich von 80 - 300°C wird erreicht, dass die in tiefen Traps gespeicherten Ladungen freigesetzt werden. Dadurch wird die Empfindlichkeit des Röntgendetektors über der ganzen Detektorfläche homogenisiert.

In einer vorteilhaften Ausgestaltung der Erfindung ist die Heizvorrichtung über der Umwandlungsanordnung angeordnet. Dabei erweist es sich als vorteilhaft, wenn die Heizvorrichtung in eine Glasplatte eingebracht ist, die über der Umwandlungsanordnung angeordnet ist. Dadurch kann bei der zweiten Ausführungsform die Szintillatoranordnung auf diese Glasplatte aufgebracht werden, ohne dass die Photosensorenanordnung schon mit der Szintillatoranordnung verbunden ist.

In einer weiteren Ausführungsform der Erfindung ist vorgesehen, dass die Heizvorrichtung über der Glasplatte, die die Umwandlungsanordnung nach oben in Richtung der auftreffenden Röntgenstrahlung abschließt, angeordnet ist und somit der Umwandlungsanordnung die Wärme zuführt. Diese Realisierung erweist sich herstellungstechnisch als einfach realisierbar, da die Umwandlungsschicht unabhängig von der Heizvorrichtung und der Photosensorenanordnung auf die Glasplatte, die als Substrat dient, aufgebracht werden kann. In einem späteren Herstellungsschritt kann dann die Heizvorrichtung auf die Glasplatte aufgebracht werden. Die Heizvorrichtung muß bei dieser Anordnung für Röntgenstrahlen durchsichtig und resistent sein.

Die Anordnung der Heizvorrichtung über der Umwandlungsanordnung erweist sich als vorteilhaft, da die erzeugte Wärme insbesondere von oben der Umwandlungsanordnung zugeführt wird. Die Photosensorenanordnung ist für höhere Temperaturen empfindlich und muß möglicherweise beim Heizen gekühlt werden, um nicht zerstört oder in ihrer Funktionsfähigkeit beeinträchtigt zu werden. Die Anordnung der Heizvorrichtung über bspw. der Szintillatoranordnung ermöglicht in erster Linie eine Wärrnezuführung zu der Szintillatoranordnung. Unter der Szintillatoranordnung angeordnete Schichten, bspw. die Dünnfilm-Elektronik mit Passivierungsschicht, nehmen bei Temperaturen von typischerweise bis zu 200 °C keinen Schaden.

In einer weiteren Gruppe von Ausführungsbeispielen ist vorgesehen, die Heizvorrichtung unter der Umwandlungsanordnung anzuordnen. Dies ist insbesondere dann vorteilhaft, wenn die Umwandlungsanordnung, insbesondere die Szintillatoranordnung auf die Photosensorenanordnung direkt aufgedampft wird.

Dabei ergibt sich einerseits die Möglichkeit, dass die Heizvorrichtung in die Glasplatte integriert ist, auf die auch die Photosensorenanordnung mittels Dünnfilmtechnik aufgebracht ist.

In einer weiteren Möglichkeit wird die Heizvorrichtung unter dieser Glasplatte mit der Dünnfilmelektronik für die Photosensorenanordnung bei der zweiten Ausführungsform oder unter den Auslesekapazitäten bei direkt konvertierenden Röntgendetektoren angeordnet.

Die Heizvorrichtung ist unabhängig von ihrer Anordnung bspw. durch in oder an Glasplatten befindliche Widerstandsdrähte ausgebildet. Diese lassen sich in oder an die Glasplatte mittels bekannter Herstellungsverfahren einbringen.

In einer weiteren Ausführungsform der Erfindung ist die Heizvorrichtung durch eine für elektromagnetische Strahlung durchlässige Widerstandsschicht ausgebildet. Dadurch wird es ermöglicht, die Heizvorrichtung über der Glasplatte über der Szintillatoranordnung oder direkt konvertierenden Umwandlungsschicht anzuordnen, so dass die auftreffende Röntgenstrahlung die Heizvorrichtung ungehindert durchdringen kann.

Mittels der Heizvorrichtung wird während des Betriebes des Röntgendetektors die lokal höhere Empfindlichkeit zurückgesetzt. Dabei kann die lokal höhere Empfindlichkeit, die auch noch inhomogen verteilt sein kann, durch das Aufheizen wieder reduziert werden, so dass Bildartefakte, die durch den Bright-Burn Effekt hervorgerufen werden, beseitigt oder wenigstens reduziert werden.

Durch Hinzufügen der Heizvorrichtung zum Röntgendetektor ist eine Verringerung oder eine Beseitigung des Bright-Burn Effekts möglich, ohne dass der Röntgendetektor für lange Zeit nicht benutzt werden kann oder demontiert werden müßte, um die Szintillatorschicht oder die direkt konvertierende Umwandlungsschicht auszutauschen.

Die Aufgabe wird auch durch ein Verfahren zum Betrieb eines Röntgendetektors mit einer Umwandlungsanordnung, bei dem der Umwandlungsanordnung während des Betriebes des Röntgendetektors mittels einer Heizvorrichtung bei Bedarf Wärme zugeführt wird.

Das Aufheizen der Umwandlungsanordnung erfolgt bspw. in regelmäßigen Abständen nach Erreichen einer zuvor festlegbaren Grenzdosis für den Direktstrahlungsbereich. Diese Dosis kann aufgrund von Erfahrungswerten oder aufgrund von Testmessungen der Bildqualität bei homogener Belichtung festgelegt werden. Die Dauer der Heizperiode liegt im Bereich von wenigen, typischerweise zehn, Minuten bis zu mehreren Stunden, abhängig von der Heiztemperatur. Neben dieser prophylaktischen Aufheizung kann auch eine gezielte Löschung des Bright-Burns bspw. unmittelbar vor einer Kalibration durchgeführt werden. Ebenso ist ein auf Anforderung eines Benutzers sofortiges Löschen des Bright-Burns durch Aufheizen möglich, wenn der Benutzer Artefakte bemerkt.

Eine weitere Aufgabe der Erfindung ist es, bei der Herstellung der Umwandlungsanordnung eine gleichmäßige Struktur des Umwandlungsmaterials zu erreichen und die erreichbare MTF (Modulation-transfer-funktion) des gesamten Röntgendetektors zu erhöhen.

Bei schneller Abkühlung des aufgedampften Szintillatormaterials bildet sich auf dem Substrat eine Schicht, die eine ungewünschte Nadelstruktur aufweist. Mittels der Heizvorrichtung wird dem Substrat, bspw. Glas, auf das die Szintillatoranordnung aufgedampft wird, vor dem Bedampfungsprozeß Wärme zugeführt. Dadurch wird es erreicht, dass die ersten sich auf dem Substrat niederschlagenden Szintillatorkristalle nicht zu schnell abkühlen, wodurch eine homogene Nadelstruktur des aufzudampfenden Szintillatormaterials erreicht wird.

Die Erfindung sieht vor, eine Substratglasplatte kontrolliert elektrisch zu beheizen, z.B. über feinste integrierte Heizdrähte wie sie bspw. in Heck- und Frontscheibenheizungen von Pkws eingesetzt werden, oder über eine auf die Platte aufgetragene Widerstandsschicht z.B. aus durchsichtigem ITO.

Im indirekten Fall, in dem eine Bedampfung mit dem Szintillatormaterial auf einer separaten Glasplatte stattfindet, kann die Heizvorrichtung direkt zum Vorheizen des Substrates genutzt werden, und somit auch das hier beschriebene Problem lösen. Auch bei direkt konvertierenden Röntgendetektoren kann durch Aufheizen des Substrats vor dem Aufbringen eine Homogenisierung des Umwandlungsmaterials erzielt werden.

Bei der direkten Bedampfung wird die Glasplatte, auf die die Dünnfilmelektronik aufgebracht ist, mit der elektrischen Heizmöglichkeit versehen. Der Substrathalter muß dann noch eine elektrische Zuleitung bzw. Kontaktierung aufweisen, um ein Aufheizen des Substrates vor dem Bedampfen zu ermöglichen.

Die Aufgabe wird auch durch ein Röntgenuntersuchungsgerät gelöst, welches einen oben beschriebenen Röntgendetektor enthält.

Im folgenden werden anhand der Figuren mehrere Ausführungsbeispiele der Erfindung näher beschrieben. Es zeigen:
- Fig.1: Röntgendetektor mit Heizung über Szintillator,
- Fig.2: Röntgendetektor mit Widerstandsheizung über der Glasplatte,
- Fig.3: Röntgendetektor mit Glasplatte mit Elektrodünnfilmelektronik und Widerstandsdrähten,
- Fig.4: ein Röntgendetektor mit Widerstandsheizung unter der Dünnfilmglasplatte,
- Fig.5: Röntgendetektor mit direkt aufgedampften Szintillator und
- Fig. 6: Röntgendetektor mit direkt aufgedampften Szintillator und Heizdrähten in der Glasplatte mit der Dünnfilmelektronik.

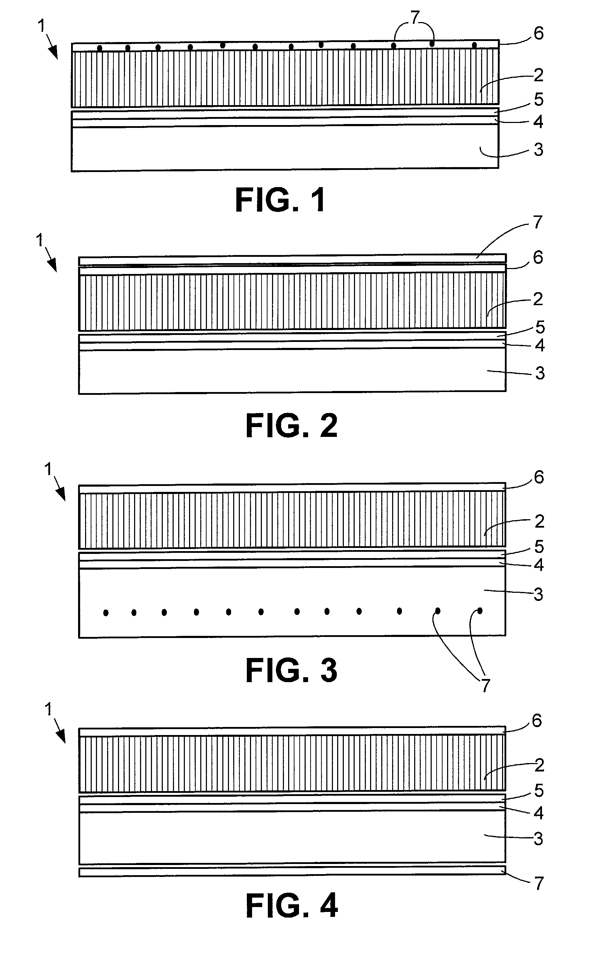

Figur 1 zeigt einen Röntgendetektor 1. Über der Szintillatoranordnung 2 ist eine Glasplatte 6 angeordnet, in der die Heizvorrichtung 7 eingebracht ist. Die Szintillatoranordnung 2 ist mittels einer Klebstoffschicht 5 mit der Dünnfilmglasplatte 3, auf der die Photosensorenanordnung aufgebracht ist, die mit einer Passivierungsschicht 4 abgedeckt ist, verbunden. Die Passivierungsschicht 4 ist bspw. aus Siliziumnitrid oder -oxid realisiert.

Die Heizvorrichtung 7 ist mittels kleiner Drähte bspw. aus Aluminium in die Glasplatte 6 eingelassen. Wenn der Querschnitt der Aluminiumdrähte wesentlich kleiner als die Pixel der Photosensorenanordnung sind, bspw. kleiner als 140 µm, ist die Heizdrahtstruktur im späteren Röntgenbild nicht zu erkennen.

Fig.2 zeigt einen Röntgendetektor, bei dem auf die Glasplatte 6 eine Widerstandsschicht 7 aufgebracht ist, die durch einen elektrischen Stromfluß Wärme erzeugt, die dem Szintillator 2 zugeführt wird. Im übrigen ist der Detektor 1 so aufgebaut wie in Fig.1.

Fig.3 zeigt einen Röntgendetektor, bei dem in die Glasplatte 3, auf der die TFT-Transistoren der Photosensorenanordnung in Dünnfilmtechnik aufgebracht sind, die Heizwiderstandsdrähte 7 eingelassen sind. Im weiteren ist die Anordnung von Fig.3 gleich der Anordnung in Fig.1.

Fig. 4 zeigt einen Röntgendetektor 1, bei dem die Heizungsvorrichtung 7 unter der Dünnfilmglasplatte 3 mit den Photosensoren angeordnet ist. Im weiteren ist die Anordnung von Fig.4 gleich der Anordnung in Fig.3.

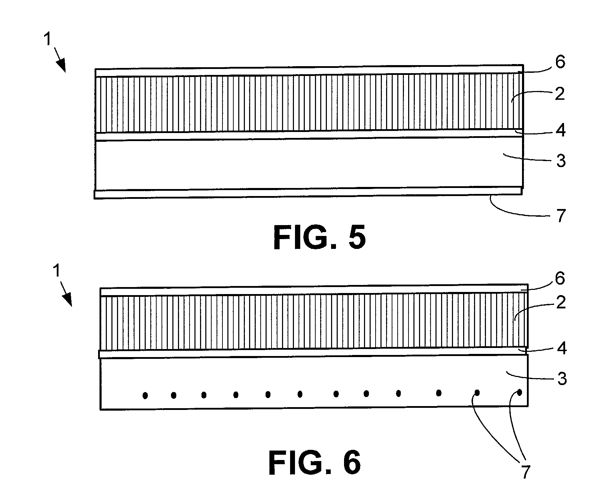

Fig.5 zeigt einen Röntgendetektor 1, bei dem die Szintillatoranordnung 2 direkt über der Passivierungsschicht 4 über der Dünnfilmglasplatte 3 mit der Photosensorenanordnung aufgebracht ist. Unter dieser Dünnfilmglasplatte 3 mit der Photosensorenanordnung ist eine Widerstandsschicht 7 angeordnet, die Wärme erzeugt, die der Röntgendetektoranordnung zugeführt wird.

Es ist ebenso möglich, bei direkt auf die passivierte Dünnfilm-Elektronik aufgedampfter Csl-Schicht, die oberste Glasplatte 6, die zum Abdichten ("Sealing") verwendet wird, durch eine Glasplatte 6 mit Heizvorrichtung 7, wie in Figur 1, zu ersetzen.

Fig. 6 zeigt einen Röntgendetektor 1, bei dem ebenfalls die Szintillatoranordnung 2 direkt über der Passivierungsschicht 4 über der Dünnfilmglasplatte 3 mit der Photosensorenanordnung aufgedampft ist. In die Glasplatte 3, die die Dünnfilmelektronik trägt, sind Heizungsdrähte 7 eingelassen. Die bei entsprechendem Stromfluß Wärme erzeugen, die dann im Szintillator ein Rücksetzen der lokal erhöhten Empfindlichkeit bewirken.

Ein Röntgendetektor 1 weist über der Szintillatoranordnung eine Reflektorschicht auf, die nach oben, in Richtung der auftreffenden Röntgenstrahlen zurückreflektierte Lichtstrahlung in Richtung der Photosensoren zur besseren Lichtausbeute reflektiert. Diese Reflektorschicht ist bspw. durch einen metallischen Reflektor (nicht dargestellt) realisiert, der auf der Unterseite der Glasplatte 6 angeordnet ist und auch als Widerstandsschicht verwendet werden kann.

Vor der Aufnahme einer Empfindlichkeits-Eichung, zur Behebung eines sichtbaren, störenden Bright-Burns oder auch prophylaktisch, kann dann durch geregeltes Aufheizen der Csl-Schicht die Empfindlichkeits-Erhöhung gezielt gelöscht werden.

In einer weiteren Ausgestaltung der Erfindung ist vorgesehen, die Photosensorenanordnung während des Heizvorgangs zu kühlen. Dies wird in den in Fig. 1 und 2 dargestellten Anordnungen erreicht, indem unterhalb der Glasplatte 3 eine Kühlung, bspw. in Form eines Peltier-Elementes angebracht wird. Zusätzlich kann eine Wasserkühlung auf der Rückseite des Detektors während des Ausheizvorganges verwendet werden.

Auch eine zusätzliche Kühlung des Detektorgehäuses von der Vorderseite zur Ausheizung ist möglich, die dann bspw. nur temporär zur Beseitigung des Bright-Burn Effektes auf den Röntgendetektor aufgesetzt wird.

## Patentansprüche

1. Röntgendetektor (1) zur Umwandlung von Röntgenstrahlung in elektrische Ladungsträger mit:
einer Umwandlungsanordnung zur Umwandlung von Röntgenstrahlung in elektrische Ladungsträger und einer Heizvorrichtung (7), die vorgesehen ist, der Umwandlungsanordnung (2) während des Betriebes des Röntgendetektors Wärme zuzuführen.

2. Röntgendetektor nach Anspruch 1,
**dadurch gekennzeichnet,**
**dass** die Umwandlungsanordnung eine Szintillatoranordnung (2) und eine Photosensorenanordnung umfaßt, wobei die Szintillatoranordnung (2) über der Photosensorenanordnung angeordnet ist.

3. Röntgendetektor nach Anspruch 1,
**dadurch gekennzeichnet,**
**dass** die Umwandlungsanordnung eine direktkonvertierende Umwandlungsschicht enthält, mittels der Röntgenstrahlung direkt in elektrische Ladungsträger umwandelbar ist.

4. Röntgendetektor nach einem der Ansprüche 1 bis 3,
**dadurch gekennzeichnet,**
**dass** die Heizvorrichtung (7) über der Umwandlungsanordnung (2) angeordnet ist.

5. Röntgendetektor nach einem der Ansprüche 1 bis 3,
**dadurch gekennzeichnet,**
**dass** die Heizvorrichtung (7) unter der Umwandlungsanordnung angeordnet ist.

6. Röntgendetektor nach Anspruch 2 und 5,
**dadurch gekennzeichnet,**
**dass** die Heizvorrichtung (7) in eine die Photosensorenanordnung enthaltende Glasplatte (3) integriert ist.

7. Röntgendetektor nach Anspruch 1,
**dadurch gekennzeichnet,**
**dass** in oder an einer Glasplatte (3, 6) befindliche Widerstandsdrähte (7) die Heizvorrichtung bilden.

8. Röntgendetektor nach Anspruch 1,
**dadurch gekennzeichnet,**
**dass** die Heizvorrichtung (7) durch eine für elektromagnetische Strahlung durchlässige Widerstandsschicht gebildet ist.

9. Verfahren zum Betrieb eines Röntgendetektors (1) mit einer Umwandlungsanordnung, der während des Betriebes des Röntgendetektors (1) mittels einer Heizvorrichtung (7) Wärme zugeführt wird.

10. Verfahren zur Herstellung eines Röntgendetektors (1), bei dem eine Heizvorrichtung (7) einem Substrat (6) vor dem Aufbringen eines Umwandlungsmaterials auf das Substrat Wärme zuführt.

11. Röntgenuntersuchungsgerät mit einem Röntgendetektor nach den Ansprüchen 1-9.
